# EUROPÄISCHE PATENTSCHRIFT

(11) **EP 1 138 425 B1**
(45) Veröffentlichungstag und Bekanntmachung des Hinweises auf die Patenterteilung: **20.07.2005**
(21) Anmeldenummer: 01104706.5
(22) Anmeldetag: 26.02.2001
(51) Int. Cl.: B23D 21/04, B23D 21/08

(54) **Rohrtrennvorrichtung**
Tubecutter
Appareil pour couper des tubes

(30) Priorität: 27.03.2000 DE 10014777
(43) Veröffentlichungstag der Anmeldung: 04.10.2001
(73) Patentinhaber: Georg Fischer Rohrverbindungstechnik GmbH, 78224 Singen (DE)
(72) Erfinder: Kramer, Herbert, 78224 Singen (DE)
(74) Vertreter: Weiss, Wolfgang

(56) Entgegenhaltungen:
- US-A- 4 890 385
- US-A- 4 953 292
- US-A- 5 495 672

## Beschreibung

Die Erfindung betrifft eine Rohrtrennvorrichtung gemäss des Oberbegriffes von Anspruch 1.

Aus der DE AS 1 171 241 ist eine Trennvorrichtung mit einer feststehenden zentrisch wirkenden Werkstück-Einspannvorrichtung bekannt. Diese Rohrtrennvorrichtung weist einen von Hand um das Werkstück herum drehbaren Drehkörper auf, der einen das scheibenförmige, motorisch angetriebene Trennwerkzeug tragenden Schneidkopf aufweist. Der Schneidkopf wird bei der Schwenkbewegung des Drehkörpers durch eine konzentrisch zur Rohrachse angeordnete Leitkurve radial gesteuert.

Aus der US 4 953 292 ist weiterhin eine tragbare, mit einer Hand zu bedienende Vorrichtung zur Bearbeitung von Rohrenden bekannt. Die Vorrichtung besteht im Wesentlichen aus einem Kegelradgetriebe, wobei das kegelförmig ausgebildete Ritzel fest verbunden ist mit einem Elektromotor, und wobei die Kegelzahnbahn ausgebildet ist an einem Ring, der entlang der Mittellinie geteilt ist. Auf der Innenseite dieses Ringes sind Vorrichtungen zum Halten, zum Schleifen und zum Schneiden der Rohrenden angeordnet. Durch den Ring hindurch kann auch Schneidöl zugeführt werden.

Weiterhin sind Rohrtrennvorrichtungen bekannt, bei denen die Trennvorrichtung mittels eines Antriebs um das zu trennende Rohr geführt wird.

Nachteilig an den bekannten Rohrtrennvorrichtungen sind die Sicherheitsaspekte. Insbesondere bei grossen Rohrdimensionen, sowohl in Bezug auf den Rohrdurchmesser als auch auf die Wanddicke, sind grössere Antriebe als auch Werkzeuge erforderlich, die die Vorrichtung schwerer machen. Ein manuelles Betätigen kann daher aufgrund von ergonomischen Ursachen leichter zu Unfällen oder zu Beschädigungen der Werkzeuge und Maschinen führen.

Ferner kann es von Nachteil sein, dass die Rohrtrennvorrichtung in beide Richtungen unkontrolliert ausschwenkt.

Es ist daher die Aufgabe der Erfindung, eine Rohrtrennvorrichtung vorzuschlagen, die sicherer als der Stand der Technik ist und bei der der eigentliche Trennungsvorgang des Rohres kontrollierbar sicher durchführbar ist.

Erfindungsgemäss wird diese Aufgabe dadurch gelöst, dass das Übersetzungsgetriebe ein mit einem Kronenrad zusammenwirkendes Stirnrad aufweist.

Die Anwendung einer Übersetzung von einem Stirnrad mit einem Kronenrad, welches an dem das zu trennende Rohr umfahrenden Drehkörper angeordnet ist, ergibt eine eine konstruktiv einfache und kompakte Lösung der oben genannten Probleme.

Gemäss einer bevorzugten Ausführungsform ist dem Stirnrad ein Freilaufgetriebe vorgeschaltet.

Das Freilaufgetriebe verhindert eine falsche Vorschubrichtung. Es ist nur möglich in der gewünschten Richtung des Wekzeuges zu arbeiten. Mit dieser Lösungsvariante ist die gewünschte Sicherheit erreicht.

In vorteilhafter Weise ist dem Stirnrad ein Schneckengetriebe vorgeschaltet.

Das Schneckengetriebe bietet eine funktionssichere Sperrfunktion, wobei beispielsweise eine manuelle Bewegung des Antriebs und damit des Werkzeuges in falscher Richtung verhindert wird.

Der Bearbeitungsvorgang kann einerseits über eine Betätigungsvorrichtung und andererseits maschinell über einen Antriebsmotor erfolgen, wobei die Betätigungs-einrichtung eine an dem Übersetzungsgetriebe geeignet angebrachte Handkurbel oder ein Handrad sein kann.

Das Übersetzungsgetriebe ist vorzugsweise fest mit der Werkstück-Einspannvorrichtung an der Lagerhalterung für den darin gelagerten Drehkörper verbunden.

Darüberhinaus kann das Übersetzungsgetriebe in der Position schwenk - oder drehbar bezüglich der Werkstück-Einspannvorrichtung verbunden sein. Je nach Platzverhältnissen ist es von Vorteil, wenn das Übersetzungsgetriebe und damit der manuelle oder maschinelle Antrieb aus verschiedenen Richtungen möglich ist. Hierzu ist alternativ eine Möglichkeit vorgesehen, das Übersetzungsgetriebe mit den Betätigungseinrichtungen in Bezug auf die Lagerhalterung schwenk - und anschliessend arretierbar vorzusehen.

In vorteilhafter Weise erfolgt der Antrieb des Übersetzungsgetriebes mittels einer biegsamen Welle.

Es ist denkbar, dass der Antrieb des Übersetzungsgetriebes nicht direkt mit dem Übersetzungsgetriebe gekoppelt ist, sondern an der Werkbank oder an der festen Lagerhalterung etc. angebracht ist. In diesem Fall könnte die Ankoppelung des Antriebes an das Übersetzungsgetriebe beispielsweise über eine biegsame Welle oder in sonstiger ähnlicher Weise erfolgen.

Im folgenden ist ein Beispiel in der Zeichnung dargestellt. Es zeigen:
Figur 1 eine dreidimensionale Darstellung der erfindungsgemässen Rohrtrennvorrichtung,
Figur 2 die Rohrtrennvorrichtung mit Freilauf - und Schneckengetriebe und
Figur 3 eine Rückansicht der Rohrtrennvorrichtung.

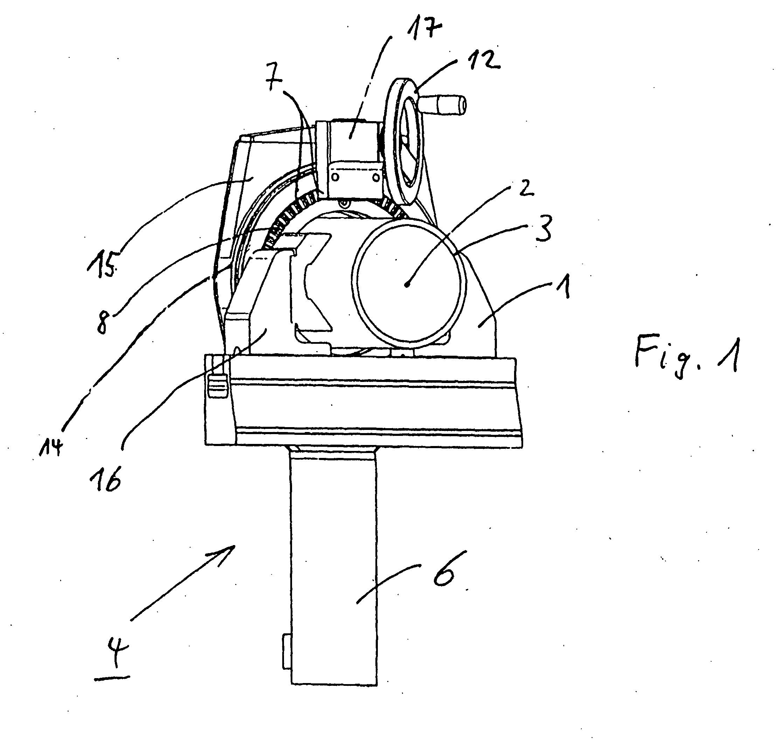

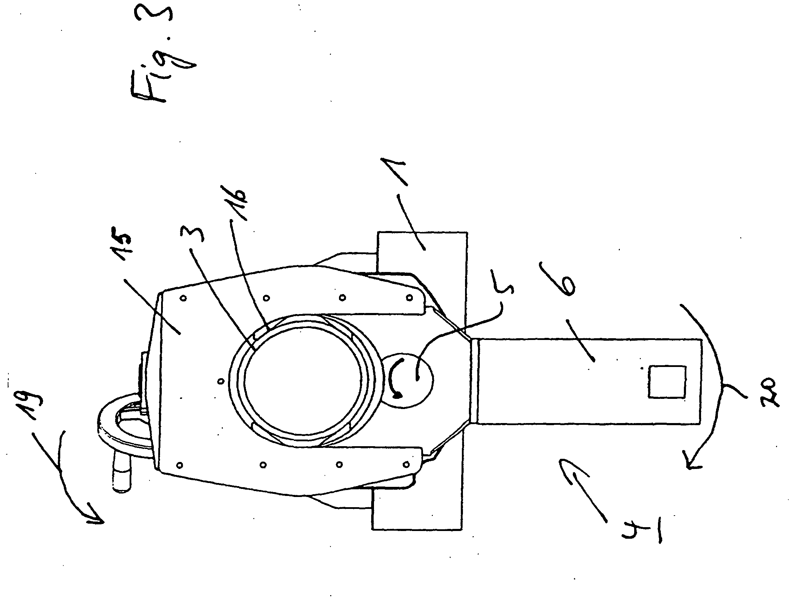

In Figur 1 ist die gesamte Rohrtrenneinrichtung dreidimensional dargestellt. Eine mit einer nicht dargestellten Werkbank oder Werktischplatte fest verbundene Werkstückeinspannvorrichtung 1 ist einer festen Lagerhalterung 14 zugeordnet, die als Aufnahme für den Drehkörper 15 dient. In dem Drehkörper 15 ist ein Kronenrad 8 angebracht. Mit dem Drehkörper 15 ist weiterhin die Trenneinrichtung 4 längsbeweglich verbunden. Ein nicht dargestellter Schieber ist längsbeweglich in Drehkörper geführt, wobei die Längsbewegung des Schiebers in an sich bekannter Weise über eine Leitkurve (Hubkurve) erfolgt. Die Trenneinrichtung 4 besteht im wesentlichen aus dem Antrieb 6 und dem in Figur 3 gezeigten Trennwerkzeug 5. Der Antrieb 6 mit dem Werkzeug 5 ist um die Achse 2 des zu trennenden, in den Spannbacken 16 eingespannten Rohres 3 drehbar über die Lagerhalterung 14 gelagert. Das Werkzeug 5 wird mittels eines Schiebers an das zu trennende Werkstück 3 über eine Hubkurve in an sich bekannter Weise geführt, wie es beispielsweise in der DE AS 1 171 241 beschrieben ist.

Das Gehäuse 17 des Übersetzungsgetriebes 7 ist fest oder schwenkar (nicht in der Zeichnung dargestellt) mit der Lagerhalterung 14 verbunden. Eine hier als Handkurbel ausgebildete Betätigungsvorrichtung 12 ist über Getriebeeinrichtungen mit dem in Figur 1 nicht dargestellten Stirnrad 9 zur Betätigung verbunden. Das Stirnrad 9 greift in das Kronenrad 8 zur schwenkbaren Betätigung der Trenneinrichtung 4 ein.

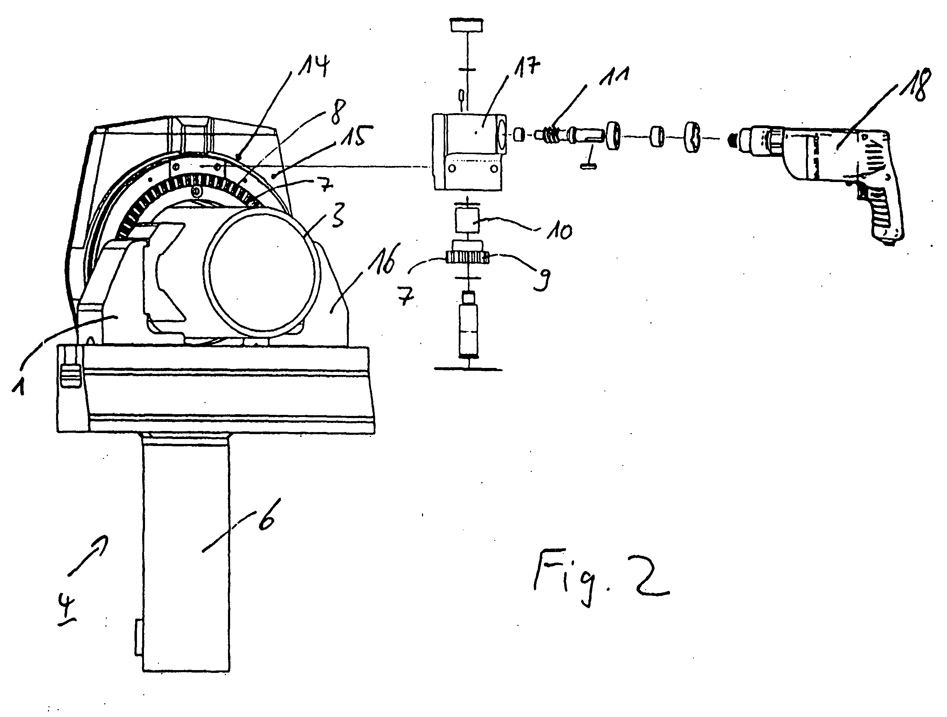

Die Einzelheiten in diesem Ausführungsbeispiel zeigt die Figur 2, in der das Gehäuse 17 für das Übersetzungsgetriebe 7 losgelöst von der Lagerhalterung 14 für das Kronenrad 8 gezeigt ist. In dem Gehäuse 17 für das Übersetzungsgetriebe 7 befindet sich neben dem Stirnrad 9 ein vorgeschaltetes Freilaufgetriebe 10. das Freilaufgetriebe dient zur Verhinderung einer falschen Vorschubrichtung des Trennwerkzeuges 5. Weiterhin ist in dem Gehäuse 17 für das Übersetzungsgetriebe 7 ein Schneckengetriebe 11 angeordnet, welches selbsthemmend zur Funktionssicherheit wirkt. Wie in Figur 1 gezeigt ist mit dem Schneckengetriebe 11 eine Handbetätigung 12 vorgesehen. In Figur 2 ist eine maschinelle Antriebsmöglichkeit, beispielsweise ein Akku-Schrauber 18 gezeigt. Der Akku-schrauber kann direkt mit dem Schneckengetriebe 11 verbunden sein. Denkbar ist auch die Verbindung über eine biegsame, nicht dargestellte Antriebswelle, wenn beispielweise aus räumlichen Gründen der maschinelle Antrieb an einem anderen Ort vorgesehen ist.

In Figur 3 ist die Rohrtrennvorrichtung von hinten gezeigt. Schematisch ist das Sägerad als Werkzeug 5 dargestellt. Durch die erfindungsgemässe Anwendung von einem Freilauf - und einem Schneckengetriebe sind mehrere Anwendungen möglich.

Die eigentliche Trennvorrichtung 4 ist nur in gewünschter Drehrichtung einerseits über die Betätigungsvorrichtung 12 in Pfeilrichtung 19 oder andererseits direkt durch Schwenken des nach unten herausragenden Antriebs 6 in gewünschter Richtung möglich. Die entgegengesetzte Richtung ist aufgrund des Freilaufes und des Schneckengetriebes verhindert. Je nach Anwendung ist es gewünscht dennoch die Trenneinrichtung 4 in entgegengesetzter Richtung zu Pfeil 20 zu bewegen. Dies ist durch geeignete gleichzeitige Betätigung der Vorrichtung 12 entgegen Pfeil 19 und eines Schwenkens des Antriebes entgegen Pfeilrichtung 20 möglich. Da hierzu eine Gleichzeitigkeit der Bewegungen erforderlich ist, kann eine unkontrollierte Kraft auf den Drehkörper 15 nicht wirken, was eine zusätzlich Sicherheit gewährleistet.

Der Vollständigkeit sei erwähnt, dass anstelle eines Sägewerkzeuges auch Trennschleifscheiben oder Anfasswerkzeuge bei dieser erfindungsgemässen Rohrtrenneinrichtung als Werkzeuge anwendbar sind.

Im folgenden ist beispielhaft ein Arbeitsablauf beschrieben:

Im ersten Schritt wird ein zu behandelndes Rohr in die Spannmittel eingespannt. Darauf folgt die Einstellung der Dimensionen,d.h. der Aktionskreis des Sägeblattes. Danach wird der Antrieb 6 eingeschaltet. Die Werkzeugzustellung erfolgt automatisch über eine Hubkurve. Die Vorschubbewegung kann manuell über die Betätigungseinrichtung 12 oder motorisch über einen Antrieb 18 erfolgen. Ebenso kann die Vorschubbewegung beispielsweise bei kleinen Rohrdimensionen durch Ziehen am Antrieb 6 erfolgen. Aufgrund des Freilaufgetriebes 10 wird ein Mitlaufen der Handbetätigung verhindert.

Nach dem Trennvorgang wird die Werkzeugzustellung automatisch zurückgefahren. Der Sägemotor kann abgeschaltet werden.

Die mit der Erfindung erzielten Vorteile liegen insbesondere in einer erhöhten Sicherheit bei dem Sägevorgang.

### Bezugszeichenliste

- 1: Werkstück-Einspannvorrichtung
- 2: Achse
- 3: Rohr
- 4: Trenneinrichtung
- 5: Trennwerkzeug
- 6: Antrieb
- 7: Übersetzungsgetriebe
- 8: Kronenrad
- 9: Stirnrad
- 10: Freilaufgetriebe
- 11: Schneckengetriebe
- 12: Betätigungsvorrichtung
- 13: biegsame Welle
- 14: Lagerhalterung
- 15: Drehkörper
- 16: Spannbacken
- 17: Gehäuse
- 18: Antrieb für Werkzeugvorschub
- 19: Pfeil in Arbeitsrichtung
- 20: Pfeil in Arbeitsrichtung

## Patentansprüche

1. Rohrtrennvorrichtung mit mindestens einer Werkstück-Einspannvorrichtung (1) und einer um die Achse (2) des zu trennenden Rohres (3) schwenkbaren Trenneinrichtung (4) mit Trennwerkzeug (5) und Antrieb (6), wobei die Trenneinrichtung (4) mittels mindestens eines Übersetzungsgetriebes (7) zum Vorschub des Werkzeuges (5) um das zu trennende Rohr (3) bewegbar ist, **dadurch gekennzeichnet, dass** das Übersetzungsgetriebe (7) ein mit einem Kronenrad (8) zusammenwirkendes Stirnrad (9) aufweist.

2. Rohrtrennvorrichtung nach Anspruch 1, **dadurch gekennzeichnet, dass** dem Stirnrad (9) ein Freilaufgetriebe (10) vorgeschaltet ist.

3. Rohrtrennvorrichtung nach Anspruch 1 oder 2, **dadurch gekennzeichnet, dass** dem Stirnrad (9) ein Schneckengetriebe (11) vorgeschaltet ist.

4. Rohrtrennvorrichtung nach Anspruch 1, 2 oder 3, **dadurch gekennzeichnet, dass** das Übersetzungsgetriebe (7) manuell über eine Betätigungsvorrichtung (12) antreibbar ist.

5. Rohrtrennvorrichtung nach Anspruch 1, 2 oder 3, **dadurch gekennzeichnet, dass** das Übersetzungsgetriebe (7) maschinell antreibbar ist.

6. Rohrtrennvorrichtung nach mindestens einem der vorherigen Ansprüche, **dadurch gekennzeichnet, dass** das Übersetzungsgetriebe (7) fest mit mit der Werkstück-Einspannvorrichtung (1) verbunden ist.

7. Rohrtrennvorrichtung nach mindestens einem der vorherigen Ansprüche, **dadurch gekennzeichnet, dass** das Übersetzungsgetriebe (7) in der Position schwenk - oder drehbar bezüglich der Werkstück-Einspannvorrichtung (1) verbunden ist.

8. Rohrtrennvorrichtung nach mindestens einem der vorherigen Ansprüche, **dadurch gekennzeichnet, dass** der Antrieb des Übersetzungsgetriebes (7) mittels einer biegsamen Welle (13) erfolgt.

## Claims

1. Pipe cutting apparatus comprising at least one work-holding fixture (1) and a cutting device (4) pivotable about the axis (2) of the pipe (3) to be cut and having a cutting tool (5) and drive (6), the cutting device (4) being movable by means of at least one transmission gearing (7) for the feed of the tool (5) about the pipe (3) to be cut, **characterized in that** the transmission gearing (7) has a spur gear (9) interacting with a crown gear (8).

2. Pipe cutting apparatus according to Claim 1,
**characterized in that** a free-wheel mechanism (10) is connected upstream of the spur gear (9).

3. Pipe cutting apparatus according to Claim 1 or 2, **characterized in that** worm gearing (11) is connected upstream of the spur gear (9).

4. Pipe cutting apparatus according to Claim 1, 2 or 3, **characterized in that** the transmission gearing (7) can be driven manually via an actuating device (12).

5. Pipe cutting apparatus according to Claim 1, 2 or 3, **characterized in that** the transmission gearing (7) can be driven mechanically.

6. Pipe cutting apparatus according to at least one of the preceding claims, **characterized in that** the transmission gearing (7) is connected to the work-holding fixture (1) in a fixed manner.

7. Pipe cutting apparatus according to at least one of the preceding claims, **characterized in that** the transmission gearing (7) is connected in position in a pivotable or rotatable manner with respect to the work-holding fixture (1).

8. Pipe cutting apparatus according to at least one of the preceding claims, **characterized in that** the drive of the transmission gearing (7) is effected by means of a flexible shaft (13).

## Revendications

1. Dispositif pour sectionner des tubes, comprenant au moins un dispositif de serrage de pièce (1) et un dispositif de coupe (4) pouvant pivoter autour de l'axe (2) du tube (3) à sectionner, avec un outil de coupe (5) et une commande (6), le dispositif de coupe (4) pouvant être déplacé au moyen d'au moins un engrenage réducteur (7) en vue de l'avance de l'outil (5) autour du tube (3) à sectionner, **caractérisé en ce que** l'engrenage réducteur (7) présente un pignon droit (9) coopérant avec une roue de chant (8).

2. Dispositif pour sectionner des tubes selon la revendication 1, **caractérisé en ce qu'**un engrenage à roue libre (10) est monté avant le pignon droit (9).

3. Dispositif pour sectionner des tubes selon la revendication 1 ou 2, **caractérisé en ce qu'**un engrenage à vis sans fin (11) est monté avant le pignon droit (9).

4. Dispositif pour sectionner des tubes selon la revendication 1, 2 ou 3, **caractérisé en ce que** l'engrenage réducteur (7) peut être entraîné manuellement par le biais d'un dispositif d'actionnement (12).

5. Dispositif pour sectionner des tubes selon la revendication 1, 2 ou 3, **caractérisé en ce que** l'engrenage réducteur (7) peut être entraîné par machine.

6. Dispositif pour sectionner des tubes selon au moins l'une quelconque des revendications précédentes, **caractérisé en ce que** l'engrenage réducteur (7) est connecté fixement au dispositif de serrage de pièce (1).

7. Dispositif pour sectionner des tubes selon au moins l'une quelconque des revendications précédentes, **caractérisé en ce que** l'engrenage réducteur (7) est connecté dans une position pivotante ou rotative par rapport au dispositif de serrage de pièce (1).

8. Dispositif pour sectionner des tubes selon au moins l'une quelconque des revendications précédentes, **caractérisé en ce que** la commande de l'engrenage réducteur (7) s'effectue au moyen d'un arbre flexible (13).
